# EUROPEAN PATENT APPLICATION

(11) **EP 2 147 903 A2**
(43) Date of publication of application: **27.01.2010**
(21) Application number: 09251806.7
(22) Date of filing: 16.07.2009
(51) Int. Cl.: C04B 35/52

(54) **Method for distributing granular components in polycrystalline diamond composites**

(30) Priority: 21.07.2008 GB 0813322
(71) Applicant: ReedHycalog UK Limited, Stonehouse, Gloucestershire GL10 3RQ (GB)
(72) Inventor: Matthias, Terry Richard, Upton St Leonards Gloucester GL4 8AH (GB)
(74) Representative: Bailey, Richard Alan

(57) **Abstract**

A method and apparatus for distributing granular constituents within polycrystalline diamond composites is disclosed in one embodiment of the invention as including providing a mixture of diamond particles of various different sizes. This mixture is then agitated to substantially segregate the diamond particles within the mixture according to particle size. The segregated mixture may then be sintered to fuse the diamond particles together and thereby immobilize the diamond particles within the mixture. In selected embodiments, the mixture may be agitated while adjacent to a substrate material. The mixture may be fused to the substrate when the diamond particles are sintered.

## Description

### BACKGROUND OF THE INVENTION

### FIELD OF THE INVENTION

This invention relates to polycrystalline diamond composites and more particularly to methods for producing abrasion-resistant and impact-resistant polycrystalline diamond compacts.

### DESCRIPTION OF THE RELATED ART

The abrasion resistance of polycrystalline diamond composites (PDC) is known to be directly related to the particle size of the diamond feedstock used in the composite. Abrasion resistance typically increases as the diamond particle size decreases and decreases as the diamond particle size increases. Abrasion resistance may also be affected by small quantities of other elements in the diamond composite. For example, metals may have a significant effect on abrasion resistance, particularly metals used as diamond catalyzing elements (e.g., cobalt, nickel, iron, etc). In general, the abrasion resistance of PDC elements decreases as the catalyzing metal content in the PDC elements increases.

The impact resistance of PDC components is also known to be directly related to the particle size of the diamond feedstock used in the composite. In general, the impact resistance is inversely related to the abrasion resistance. That is, the impact resistance typically decreases as the diamond particle size decreases and increases as the diamond particle size increases. Impact resistance may also be affected by small quantities of other elements in the diamond composite. For example, small quantities of metals, particularly catalyzing metals, tend to increase the PDC's impact resistance, as long as the metal content is within limits needed to obtain diamond-to-diamond bonding.

Because abrasion resistance typically works in opposition to impact resistance, various techniques have been developed to establish tough, wear-resistant diamond composites (i.e., PDC elements that are both abrasion resistant and impact resistant). One technique is to use multimodal diamond layers, which are layers that contain diamond particles of different sizes that are mixed in defined proportions. Another technique is to create course textured interfaces between the diamond layer and the underlying substrate (e.g., cobalt-cemented carbide substrates). Other techniques include using diamond particles of different sizes in two or more distinct layers or regions within the diamond composite; increasing the catalyzing metal content within the diamond layer to increase impact resistance; and using varying mixtures of diamond and tungsten carbide in several layers.

Each of the above techniques may exhibit various shortcomings, however. For example, some techniques, such as those that utilize multiple layers, may increase costs by requiring multiple processing or fabrication steps or may create layered structures that may tend to fracture or delaminate along the boundary lines between layers. Yet other techniques may create structures with undesirable residual stress between the diamond layer and the substrate, thereby decreasing the impact resistance of the structure. Other techniques may be unsuitable to create diamond layers that are continuously graded or substantially continuously graded by particle size.

In view of the foregoing, what are needed are methods for distributing granular components in diamond layers to provide desired properties or characteristics, such as improved impact resistance and/or abrasion resistance. Further needed are methods for creating diamond layers that are continuously graded or substantially continuously graded according to particle size. Yet further needed are methods to reduce the residual stress between diamond layers and substrate layers when fabricating PDC structures.

### SUMMARY OF THE INVENTION

Consistent with the foregoing and in accordance with the invention as embodied and broadly described herein, a method for distributing granular components in polycrystalline diamond composites is disclosed in one embodiment of the invention as including providing a mixture of diamond particles containing various different particle sizes. This mixture may then be agitated to substantially segregate the diamond particles according to particle size. The segregated mixture may then be sintered to fuse the diamond particles together and immobilize the diamond particles within the mixture.

In selected embodiments, the agitation process may cause larger diamond particles to move upward through the mixture and smaller diamond particles to move downward through the mixture (i.e., the "Brazil-Nut Effect"). In other embodiments, the agitation process may cause smaller diamond particles to move upward through the mixture and larger diamond particles to move downward through the mixture (i.e., the "Reverse-Brazil-Nut Effect"). In certain embodiments, the diamond particles, after segregation, may form a substantially continuously graded mixture of diamond particles (e.g., fine-to-course, course-to-fine, etc). In other embodiments, the diamond particles may, after segregation, form substantially discrete layers of different size diamond particles.

In another aspect of the invention, a method for distributing granular constituents within polycrystalline diamond composites includes providing diamond particles segregated into adjacent regions according to particle size. These diamond particles may then be agitated to create a zone of intermixing between the adjacent regions. The diamond particles may then be sintered to fuse the diamond particles together and immobilize the diamond particles within each region.

In selected embodiments, the agitation process may cause larger diamond particles to move upward and smaller diamond particles to move downward (i.e., the "Brazil-Nut Effect"). In other embodiments, agitation process may cause smaller diamond particles to move upward and larger diamond particles to move downward (i.e., the "Reverse-Brazil-Nut Effect"). In certain embodiments, the diamond particles form a substantially continuously graded mixture of diamond particles (e.g., fine-to-course, course-to-fine, etc) in the zone of intermixing.

In another aspect of the invention, a cutting element in accordance with the invention includes a polycrystalline diamond composite (PDC) layer comprising diamond particles of different sizes. These diamond particles may be substantially continuously graded, according to size, from a first side of the layer to a second side of the layer. In certain embodiments, the cutting element may further include a substrate layer adhered to the PDC layer. In selected embodiments, the interface between the substrate layer and the PDC layer is substantially planar. In other embodiments, the interface between the substrate layer and the PDC layer is substantially non-planar.

### BRIEF DESCRIPTION OF THE DRAWINGS

In order that the advantages of the invention will be readily understood, a more particular description of the invention briefly described above will be rendered by reference to specific embodiments illustrated in the appended drawings. Understanding that these drawings depict only typical embodiments of the invention and are not therefore to be considered limiting of its scope, the invention will be described and explained with additional specificity and detail through use of the accompanying drawings in which:
Figure 1A is a perspective view of one embodiment of a PDC cutting element made using a method in accordance with the invention;
Figures 1B through 1D are several cross-sectional profile views of different embodiments of PDC cutting elements made using a method in accordance with the invention;
Figure 2 is a cross-sectional profile view of one embodiment of a cup-shaped substrate used when implementing a method in accordance with the invention;
Figure 3 is a cross-sectional profile view of one embodiment of a cup used when implementing a method in accordance with the invention;
Figure 4A is a cross-sectional profile view of another embodiment of a PDC cutting element made using a method in accordance with the invention;
Figure 4B is a face view of the PDC cutting element of Figure 4A;
Figures 5A and 5B are cross-sectional profile views of several alternative embodiments of PDC cutting elements fabricated using a method in accordance with the invention;
Figure 6 is a graph showing one embodiment of a particle-size distribution corresponding to a mixture of diamond particles;
Figures 7A through 7D are cross-sectional profile views of several embodiments of PDC cutting elements fabricated using a method in accordance with the invention and having the particle-size distribution of Figure 6, each having a substantially continuously graded distribution of particle sizes;
Figure 8 is a graph showing particle-size distributions for several mixtures of diamond particles;
Figure 9 is a cross-sectional profile view of a PDC cutting element having the particle-size distributions of Figure 8;
Figure 10 is another graph showing particle-size distributions for several mixtures of diamond particles;
Figure 11 is a cross-sectional profile view of a PDC cutting element having the particle-size distributions of Figure 10;
Figure 12 is another graph showing particle-size distributions for several mixtures of diamond particles;
Figure 13 is a cross-sectional profile view of a PDC cutting element having the particle-size distributions of Figure 12;
Figure 14 is yet another graph showing particle-size distributions for several mixtures of diamond particles;
Figure 15 is a cross-sectional profile view of a PDC cutting element having the particle-size distributions of Figure 14;
Figures 16A and 16B are several graphs showing skewed particle-size distributions which may be beneficial in PDC cutting elements in accordance with the invention;
Figures 17A and 17B are several cross-sectional profile views used to illustrate an alternative method for producing PDC cutting elements in accordance with the invention;
Figures 18A and 18B are cross-sectional profile views of PDC cutting elements having multiple continuously graded regions made using a method in accordance with the invention;
Figure 19A is a cross-sectional profile view of another embodiment of a PDC cutting element having multiple continuously graded regions made using a method in accordance with the invention;
Figure 19B is a face view of the PDC cutting element of Figure 19A;
Figures 20A and 20B are cross-sectional profile views of several embodiments of PDC cutting elements having non-planar interfaces between the diamond layer and the substrate;
Figure 21 is a cross-sectional profile view of a PDC cutting element in the form of a roller-cone bit;
Figure 22 is a cross-sectional profile view of a leached layer incorporated into the diamond layer of a PDC cutting element in accordance with the invention;
Figure 23 is a flow chart of one embodiment of a method in accordance with the invention; and
Figure 24 is a flow chart of an alternative embodiment of a method in accordance with the invention.

### DETAILED DESCRIPTION OF THE INVENTION

It should be understood that the components of the present invention, as generally described and illustrated in the Figures herein, could be arranged and designed in a wide variety of different configurations. Thus, the following more detailed description of the embodiments of the invention, as represented in the Figures, is not intended to limit the scope of the invention, as claimed, but is merely representative of certain examples of presently contemplated embodiments in accordance with the invention. The presently described embodiments will be best understood by reference to the drawings, wherein like parts are generally designated by like numerals.

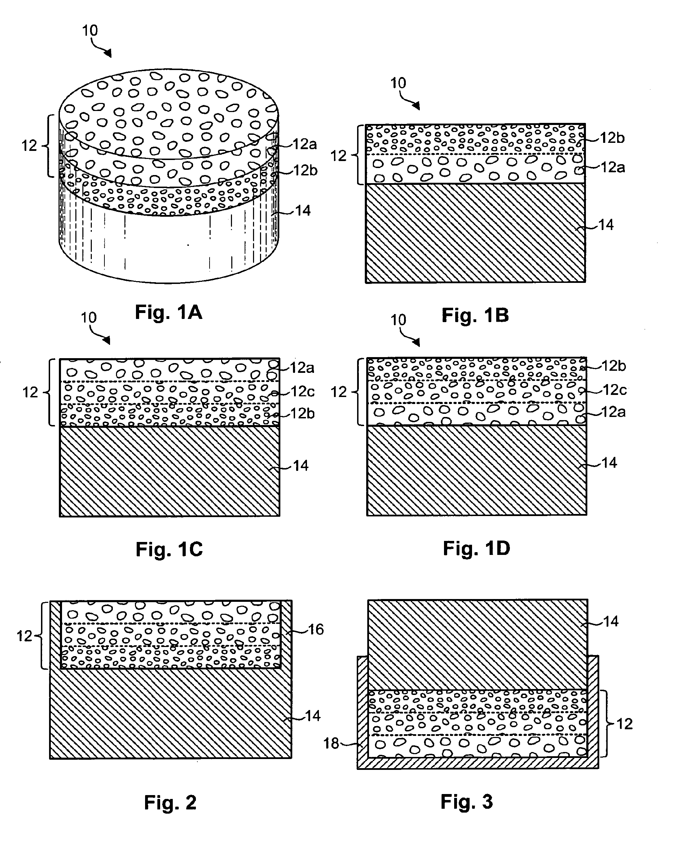

Referring to Figures 1A through 1D, as mentioned, conventional fabrication techniques may be used to create polycrystalline diamond composites with multiple layers of diamond. In certain cases, each layer may be designed to contain diamond particles with different particle sizes or different particle-size distributions. Because both the abrasion resistance and impact resistance of polycrystalline diamond composites (PDC) are related to diamond particle size, the multi-layered approach may be used to produce PDC cutting elements that are both abrasion and impact resistant.

In selected embodiments in accordance with the invention, an effect known as the "Brazil-Nut Effect" or "Reverse-Brazil-Nut Effect" may be used to produce a layered diamond composite in accordance with the invention. Although these effects are most commonly associated with undesired separation of granular particles according to particle size (as occurs in many cereal products), these effects may be used advantageously to produce layered diamond composites or diamond composites that are substantially continuously graded according to particle size. In general, the Brazil-Nut Effect is an effect whereby mixtures of different size particles separate into regions or layers according to particle size when agitated. Where the particles have substantially the same density, larger particles will tend to migrate to the top of the mixture and smaller particles will tend to migrate to the bottom of the mixture.

The Brazil-Nut Effect, however, is actually more complex than previously thought. Through an effect known as the "Reverse-Brazil-Nut Effect," it has been demonstrated that it is possible for larger particles to migrate to the bottom of the mixture and smaller particles to migrate to the top of the mixture. Some researchers have determined that density has a significant effect on segregation, although the effect of density is counterintuitive. That is, larger particles that are heavier (i.e., more dense) have been observed to rise to the top of the mixture whereas larger particles that are lighter (i.e., less dense) tend to migrate to the bottom of the mixture.

Although significant research has been dedicated to counteract the effects of the Brazil-Nut Effect and Reverse-Brazil-Nut Effect (i.e., to prevent the separation from occurring), these effects may be used advantageously to fabricate PDC elements in accordance with the invention. In particular, thick diamond-layer PDC elements, with diamond layers currently measuring up to four millimeters thick, enable these effects to be exploited in ways that are beneficial to their manufacture and performance.

In selected embodiments in accordance with the invention, the diamond layer 12 of PDC elements 10, as illustrated in Figures 1A through 1D, may be fabricated by initially providing a homogenous or substantially homogeneous mixture of diamond particles of different particle sizes. This mixture may then be agitated (e.g., shaken, vibrated, mixed, etc.) until the diamond particles separate into layers of different particle sizes. The duration and vigorousness of the agitation process may be adjusted, as needed, to provide layers with a desired amount of separation.

In selected embodiments, the diamond particles may be agitated until substantially complete separation according to particle size occurs. In other embodiments, the diamond particles may be agitated until the diamond particles are mostly separated by size, but with some intermixing between each layer. In yet other embodiments, as will be explained in more detail hereafter, the diamond particles may be mixed to achieve a substantially continuously graded mixture (i.e., course-to-fine, fine-to-course, etc.) of diamond particles through the diamond layer 12. Thus, for the purposes of this description as well as the appended claims, the terms "segregated" or "separated" may refer not only to complete separation (i.e., discrete layers with definite boundaries) but also to embodiments with various amounts of intermixing between each layer, or even to embodiments with substantially continuously graded mixtures of diamond particles through the diamond layer 12. Thus, the level of "segregation" or "separation" may be complete or partial.

Figures 1A through 1D show various embodiments of cutting elements 10 where a mixture of diamond particles containing distinct particle sizes is agitated until complete or substantially complete separation occurs. Each of the embodiments 10 includes a diamond layer 12 adhered to a substrate layer 14, such as a tungsten carbide substrate layer 14. Figure 1A is an embodiment of a cutting element 10 where the Brazil-Nut Effect is applied to the diamond layer 12 of the cutting element 10 to produce a course diamond layer 12a over a fine diamond layer 12b. Figure 1B is an embodiment of a cutting element 10 where a similar process is applied to the diamond layer 12 to produce a fine diamond layer 12b over a course diamond layer 12a. Figure 1C shows a diamond layer 12 with three layers, namely a course diamond layer 12a over a medium-sized diamond layer 12c over a fine diamond layer 12b. Figure 1D shows a diamond layer 12 with the same three layers 12a, 12b, 12c as Figure 1C, except in reverse order. Some amount of intermixing may be present between each of the layers 12a, 12b, 12c. In other embodiments, layered structures with more than three layers may be produced using a similar process.

Referring to Figure 2, to agitate and segregate the diamond particles, a vessel may be provided to retain the diamond particles during agitation. In selected embodiments, the substrate 14 may be designed in the form of a vessel. For example, in certain embodiments, the substrate 14 may be shaped in the form of a cup. The diamond particles may then be placed in the cup and the substrate 14 may be agitated until the diamond particles are segregated by size. If desired, a cap (not shown) or cover may be used to cover the cup while the diamond particles are agitated. Once a desired level of segregation is achieved, the diamond particles may be pressed and sintered to fuse together and immobilize the diamond particles in the diamond layer 12. The sides 16 of the substrate 14 may then be ground or cut away to leave the cutting element 10.

Referring to Figure 3, in another embodiment, a separate cup 18 or vessel 18 may be used to retain the diamond particles during agitation. In selected embodiments, this cup 18 may be agitated alone or in the presence of the substrate 14. Where the substrate 14 is present, the substrate 14 may act as a cap to enclose the diamond particles in the cup 18 during agitation. A small amount of free space may be provided between the substrate 14 and the diamond particles to allow the diamond particles to freely move relative to one another during agitation. When the diamond particles have achieved a desired level of segregation, the substrate 14 may be urged into the cup 18 to lock or immobilize the diamond particles prior to sintering. In selected embodiments, the cup 18 may form part of the pressing unit used to fabricate the diamond layer 12 during pressing and sintering.

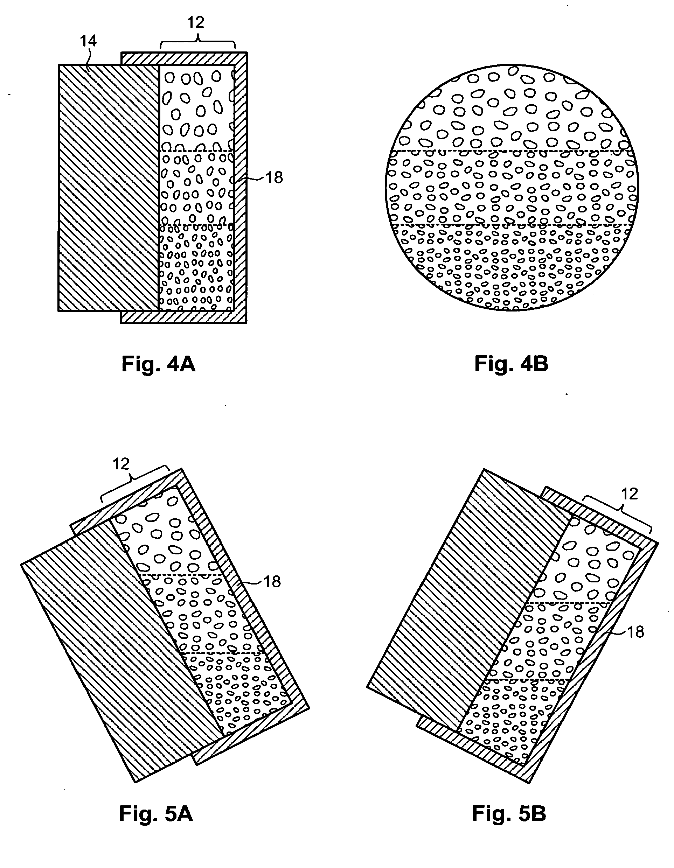

Referring to Figures 4A through 5B, the cup 18 described in Figure 3 may be used to create various different distributions of diamond particles through the diamond layer 12. For example, referring to Figure 4A, by agitating the diamond particles with the cup 18 and substrate 14 in a vertical orientation, the diamond particles may be segregated across the face of the cutting element 10. Figure 4B is a face view of the PDC cutting element of Figure 4A. Such a design may be useful where different properties or characteristics are desired for different edges or surfaces of the cutting element 10. For example, one portion or edge of the cutting element 10 may experience more abrasion and thus may benefit by having smaller diamond particles. Another portion or edge of the cutting element 10 may experience greater impacts and thus may benefit by having larger diamond particles. Figures 5A and 5B show various distributions of diamond particles that are possible by tilting and agitating the cup 18 and substrate 14 at various angles.

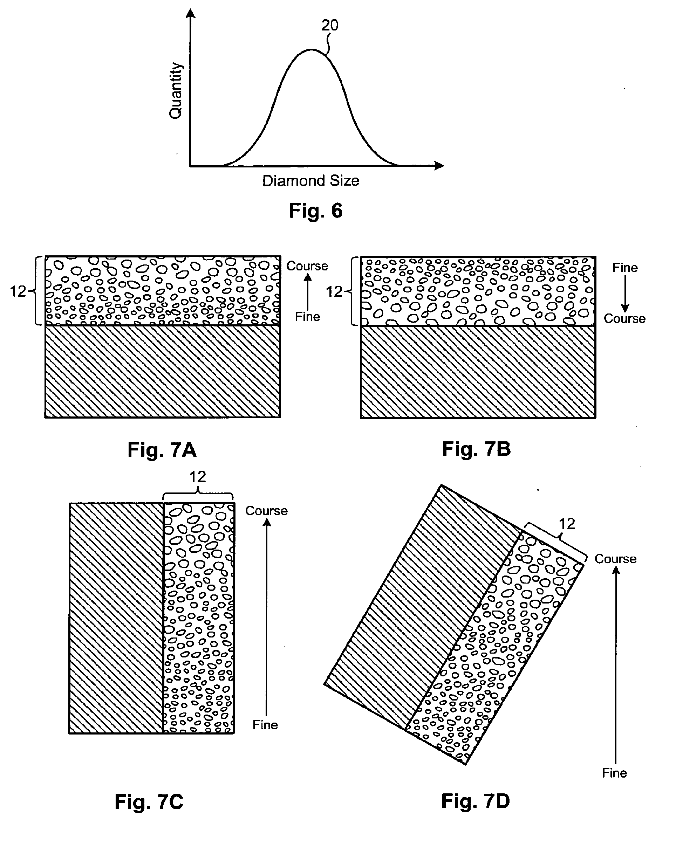

Referring to Figures 6 through 7D, in practice, micron-sized diamond when purchased typically does not contain a single size of diamond, or discrete diamond sizes, but rather contains a continuous range of diamond sizes. This range may be described by a curve 20 representing the mixture's "particle-size distribution" (PSD), as shown in Figure 6. A narrow PSD specification may restrict the diamond sizes closely around a single size of diamond whereas a wide specification may contain a larger range of diamond sizes.

By taking a mixture of diamond particles with a given PSD and applying the Brazil-Nut Effect or Reverse-Brazil-Nut Effect using, for example, the cup-shaped vessel 18 described in association with Figure 3, it is possible to produce PDC elements with a continuous or substantially continuous variation of diamond sizes through the diamond layer 12. With a narrow PSD, this variation can be small. With a wide PSD, this variation can be quite large. This continuous or substantially continuous variation is very difficult if not impossible to achieve using conventional PDC layering techniques. Figures 7A through 7D show several embodiments of PDC cutting elements with continuous or substantially continuous variations of diamond particles through the diamond layer 12. Each of these variations may be achieved by orienting the cup 18 and substrate 14 in different directions while applying the Brazil-Nut Effect or Reverse-Brazil-Nut Effect.

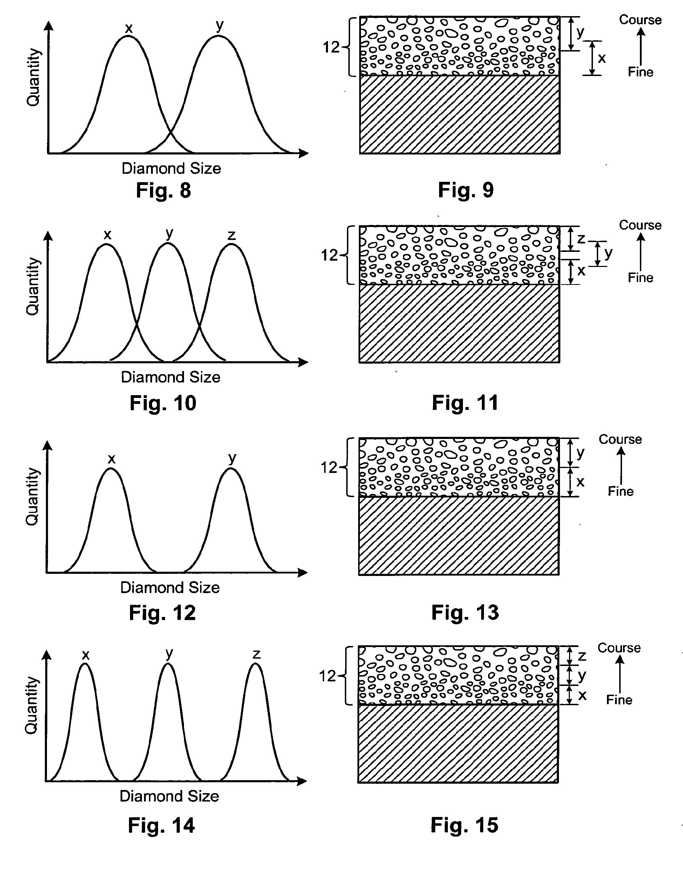

Referring to Figures 8 through 15, in selected embodiments, it may also be desirable to combine diamond mixtures characterized by different PSDs to fabricate PDC cutting elements with different properties or characteristics. For example, referring to Figures 8 and 9, two overlapping PSDs ("x" and "y") may be combined to create a PSD having a more complex particle-size distribution. The Brazil-Nut Effect or Reverse-Brazil-Nut Effect may then be applied to this mixture to provide a diamond layer 12 with a unique particle-size distribution. Figures 10 and 11 show three overlapping PSDs ("x," "y," and "z") that are combined to create a diamond layer 12 with unique properties and characteristics. These techniques may be used for any number of diamond particle mixtures having unique PSDs.

In other embodiments, it may also be desirable to combine two or more mixtures having distinct, non-overlapping PSDs. This may create a diamond layer 12 with multiple distinct layers, each with a continuous or substantially continuous variation of diamond sizes through the distinct layers. For example, Figures 12 and 13 show two distinct, non-overlapping PSDs ("x" and "y") that are combined to create a diamond layer 12. Similarly, Figures 14 and 15 show three distinct, non-overlapping PSDs ("x," "y," and "z") that are combined to create a diamond layer 12.

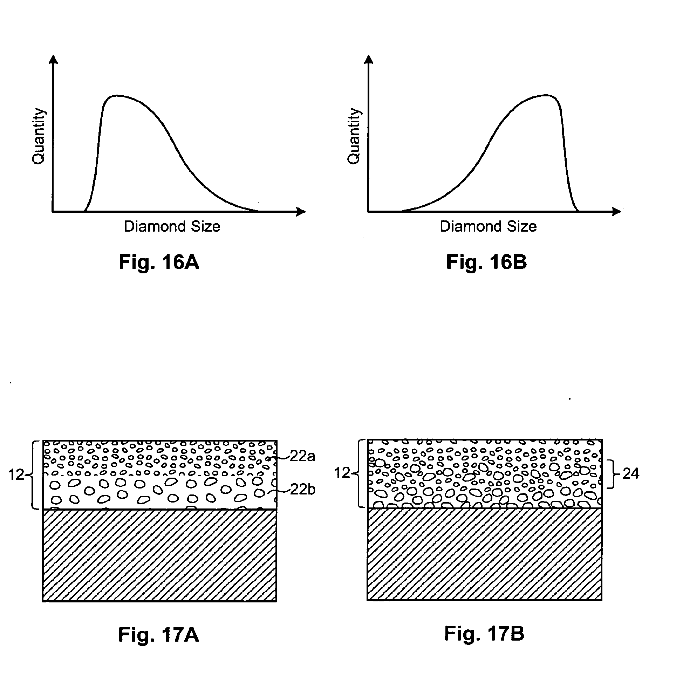

Referring to Figures 16A and 16B, in certain cases, it may be advantageous to create PDC elements with mixtures of diamond particles having skewed PSDs. For example, diamond particle mixtures characterized by different PSDs may be combined in different proportions to create skewed PSDs, as shown in Figures 16A and 16B, or PSDs having other shapes or formes. Skewed PSDs, for example, may reflect different proportions of fine or course diamonds, which may be used to adjust the abrasion or impact resistance of PDC elements. In certain embodiments, the Brazil-Nut Effect or Reverse-Brazil-Nut Effect may be used to create a mixture with a skewed PSD. For example, the Brazil-Nut Effect or Reverse-Brazil-Nut Effect may be used to segregate diamond particles according to size, after which fine or course particles may be skimmed or otherwise removed from the mixture to change the PSD of the mixture.

Referring to Figures 17A and 17B, in selected embodiments, instead of using the Brazil-Nut Effect or Reverse-Brazil-Nut Effect to segregate diamond particles according to size, these effects may be used advantageously to mix diamond particles in desired proportions and gradations. For example, diamond particles of different sizes may be initially deposited in the form of one or more layers 22a, 22b, as illustrated in Figure 17A.

For example, larger diamond particles may be deposited as a lower layer 22b and smaller diamond particles may deposited as an upper layer 22a. As shown in Figure 17B, the Brazil-Nut Effect or Reverse-Brazil-Nut Effect may then be used to create a zone 24 of intermixing between the layers. That is, by agitating the layers 22a, 22b, larger diamond particles from the lower layer 22b may migrate upward through the smaller particles of the upper layer 22a. Similarly, smaller particles may begin to migrate downward through the larger particles. The extent of intermixing may be controlled by factors such as the vigor or duration of the agitation process. Similarly, the zone 24 of intermixing may be a relatively narrow zone 24 between the layers 22a, 22b, or a significantly wider zone 24 between the layers 22a, 22b.

If the mixing is continued, the larger particles may begin to congregate at the top of the diamond layer 12 while the smaller particles may begin to congregate at the bottom of the diamond layer 12, with a mixture of larger and smaller sized particles in between. This will effectively invert the distribution of diamond particles shown in Figure 17A. Thus, in addition to segregating diamond particles according to particle size, the Brazil-Nut Effect or Reverse-Brazil-Nut Effect may be used advantageously to mix diamond particles in desired proportions.

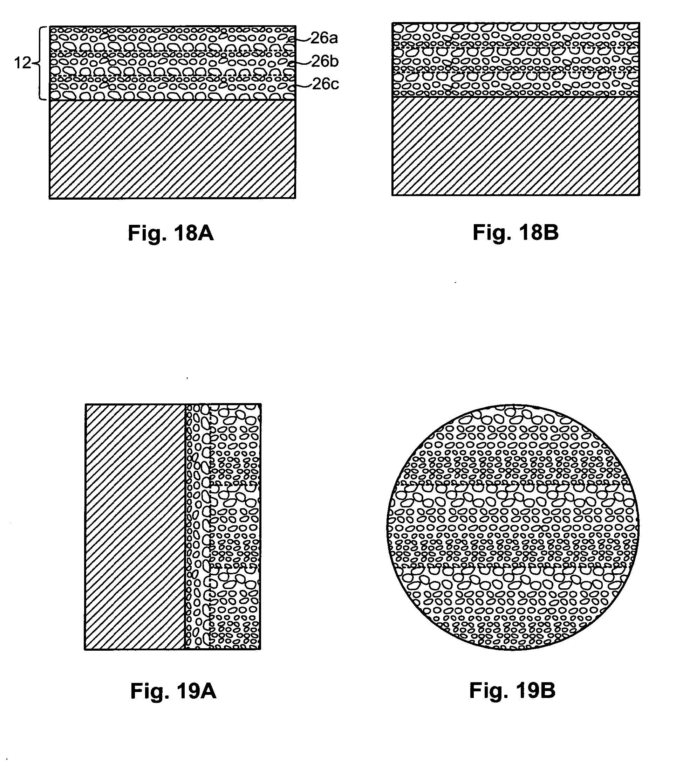

Referring to Figures 18A through 19B, in other embodiments in accordance with the invention, a fixing agent such as wax or other organic binders may be used to temporarily hold diamond particles in place prior to sintering. Such a fixing agent may be used to create different diamond particle distributions using the Brazil-Nut or Reverse-Brazil-Nut Effect. For example, referring to Figure 18A, the Brazil-Nut or Reverse-Brazil-Nut Effect may be used to produce layers 26a c of segregated diamond using any of the methods previously discussed herein. The diamond within each of these layers 26a c may be temporarily immobilized using a fixing agent, such as by pouring hot liquid wax into the diamond particles of each layer 26a-c. After the wax cools and hardens, the layers 26a-c may be stacked or arranged in different configurations to provide a desired diamond distribution. The wax may then be melted and drained, or evaporated off as a volatile in a separate operation or during sintering, to leave the desired diamond distributions. Figures 18A through 19A are examples of various patterns that may be created using such a process, with Figure 19B being a face view of Figure 19A.

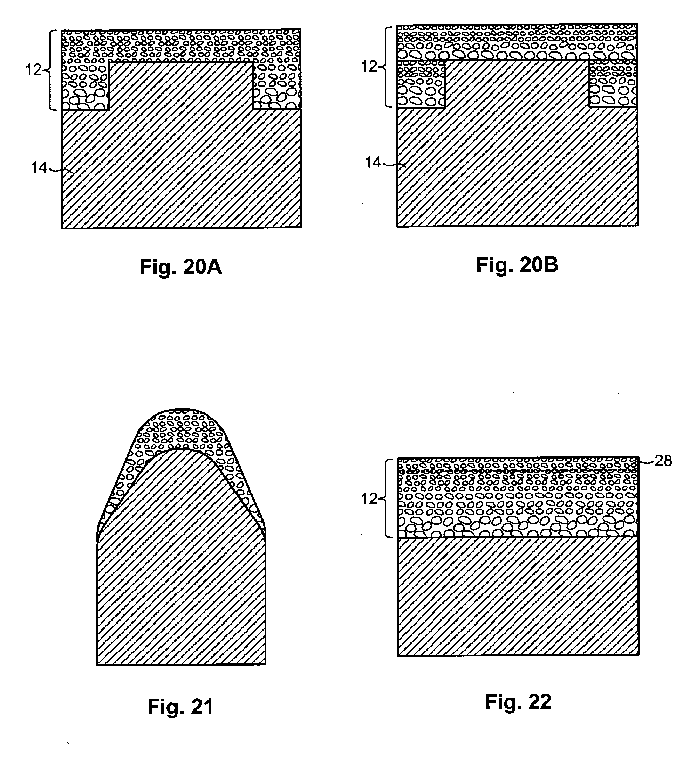

Referring to Figures 20A through 22, in selected embodiments, the methods discussed herein may be used with various other procedures or techniques used to fabricate PDC cutting elements. For example, referring to Figures 20A and 20B, in certain embodiments, methods in accordance with the invention may be used to fabricate cutting elements with non-planar interfaces, such as textured interfaces, between the diamond layer 12 and the substrate 14. Such a non-planar interface may reduce residual stress and improve the bond between the layers 12, 14. In other embodiments, methods in accordance with the invention may be used to fabricate cutting elements with various different shapes and sizes, such as used in roller-cone bits, as illustrated in Figure 21.

Referring to Figure 22, in other embodiments, methods in accordance with the invention may be used with other processes, such as a leaching process. The leaching process is a process wherein catalysts are removed from the cutting edge or face of the cutting element to create a relatively thin thermo-stable, self-sharpening, wear-resistant layer on the cutting face of the PDC cutting element. In selected embodiments, the Brazil-Nut or Reverse-Brazil-Nut Effect may be used to create desired distributions of catalyzing metals or other elements in the diamond layer 12 to facilitate the formation of a leached layer 28. Furthermore, in selected embodiments, the Brazil-Nut or Reverse-Brazil-Nut Effect may be used in combination with a skewed PSD to provide a relatively thick section of fme diamond particles in the exposed cutting surface, which may be partially leached. This may provide an improved support structure to the lip of the leached layer 28, possibly minimizing or reducing flinting.

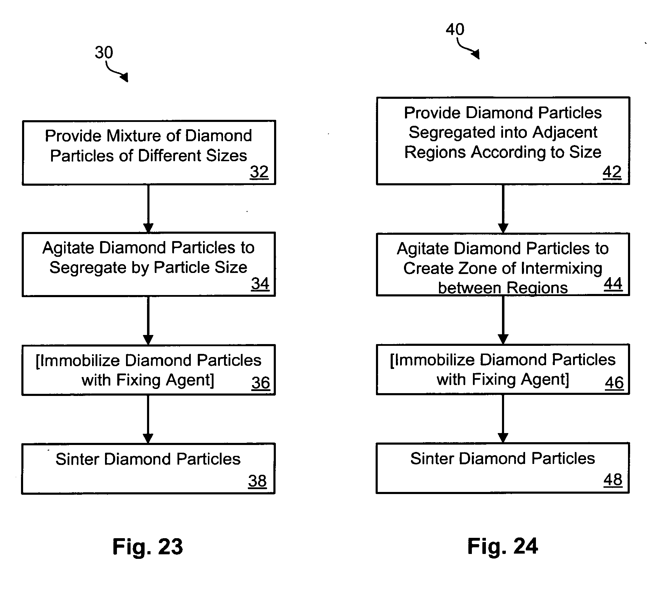

Referring to Figure 23, one embodiment of a method 30 for producing diamond layers 12 with unique particle-size distributions is illustrated. A method 30 in accordance with the invention may include initially providing 32 a mixture of diamond particles of different sizes. These diamond particles may then be agitated 34 to segregate the diamond particles by particle size. As mentioned previously, "segregation" may include complete separation (i.e., distinct layers with definite boundaries), distributions with various levels of intermixing at the boundaries, or substantially continuously graded mixtures of diamond particles through the diamond layer 12. If desired, the diamond particles may be immobilized 36 using a fixing agent such as wax. After a desired particle-size distribution is achieved, the diamond particles may be pressed and sintered 38 to permanently bond the diamond particles together.

Referring to Figure 24, in an alternative embodiment of the invention, a method 40 in accordance with the invention may include initially providing 42 diamond particles segregated into adjacent regions (e.g., layers) according to particle size. These diamond particles may then be agitated 44 to create a zone of intermixing between the regions, as discussed in association with Figures 17A and 17b. As mentioned previously, the zone of intermixing may be a relatively narrow zone or a relatively wide zone between the layers. If desired, the diamond particles may be immobilized 46 using a fixing agent such as wax. After a desired particle-size distribution is achieved, the diamond particles may be pressed and sintered 48 to permanently bond the diamond particles together.

While particular reference is made herein to PDC cutting elements, the methods disclosed herein may be applied to other PDC technologies, such as semi-conductors, diamond heat sinks, mechanical tooling, surgical blades, or the like. Furthermore, the disclosed methods are not limited to diamond particles, but may be applied to other granular materials as well. For example, various catalysts and solvent metals (e.g., Ni, Co, Fe, etc.) may be used to assist diamond layer sintering, while also having an affect on abrasion resistance and impact resistance. These materials may also be distributed in a desired manner through the diamond layer 12 using the Brazil-Nut or Reverse-Brazil-Nut Effect.

For example, in selected embodiments, all or a portion of the diamond particles defined by a PSD may be coated with a catalyst or solvent metal to aid the sintering process. If a portion of all sizes of diamond particles defined by the PSD are coated and mixed with the remainder of the diamond particles, a diamond layer 12 having a uniform distribution of diamond and catalyst may be achieved. By selecting the appropriate portions and diamond sizes that are coated, the mixture may maintain a substantially uniform distribution even after the diamond particles are agitated and segregated by size.

In other embodiments, the diamond layer 12 may be designed with varying amounts of catalyst or other materials through the diamond layer 12. For example, by coating a larger proportion of larger or smaller diamond particles with catalyst material, varying amounts of catalyst may be introduced into the course or fine portions of the diamond layer 12. For example, a cutting element may be designed to have a higher catalyst content at the interface between the diamond layer 12 and a tungsten carbide substrate 14 (providing faster sintering and higher impact resistance), and a lower catalyst content at the front face of the cutting element (providing higher abrasion resistance), with a graduated amount of catalyst content in between the interface and the front face.

In other embodiments, other elements such as metals, non-metals, catalyzing metals, or the like may be added to the diamond layer 12 as powders of various particle sizes prior to agitation and sintering. By tailoring the particle size and quantity of these powders, the Brazil-Nut or Reverse-Brazil-Nut Effect may be applied to these powders to provide desired distributions through the diamond layer 12. For example, a mixture of diamond particles and tungsten carbide particles may be agitated to provide a graduated layer of continuously decreasing pre-sintered tungsten carbide content and continually increasing diamond content. This process may be used to fabricate a cutting element with a smooth transition between the diamond layer and the tungsten carbide substrate layer to reduce residual stresses therebetween.

In other embodiments, a mixture of diamond particles and tungsten particles may be agitated to provide a graduated layer of continuously decreasing tungsten content and continually increasing diamond content. This layer may then be sintered to provide a single layer of varying proportions of tungsten (which is converted to tungsten carbide when sintered in the presence of diamond) and diamond.

In yet other embodiments, the methods described herein may be applied to cemented tungsten carbide components. For example, a graded tungsten carbide component or graded tungsten carbide may be fabricated by providing a mixture of tungsten carbide or cobalt particles of various sizes and agitating the mixture to segregate the particles by particle size. This mixture may then be sintered in the conventional manner either alone or with a diamond layer in a PDC press.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope. Whereas the present invention has been described in particular relation to the drawings attached hereto, it should be understood that other and further modifications apart from those shown or suggested herein, may be made within the scope and spirit of the present invention.

## Claims

1. A method for distributing granular constituents within polycrystalline diamond composites, the method comprising:
providing a mixture comprising diamond particles of different sizes;
agitating the mixture to substantially segregate the diamond particles within the mixture according to size;
sintering the diamond particles to fuse the diamond particles together and thereby immobilize the diamond particles within the mixture.

2. The method of claim 1, wherein agitating comprises moving larger diamond particles upward through the mixture and smaller diamond particles downward through the mixture.

3. The method of claim 1, wherein agitating comprises moving smaller diamond particles upward through the mixture and larger diamond particles downward through the mixture.

4. The method of claim 1, wherein substantially segregating the diamond particles comprises creating a substantially continuously graded mixture of diamond particles.

5. The method of claim 1, wherein substantially segregating the diamond particles comprises creating substantially discrete layers of different size diamond particles.

6. The method of claim 1, further comprising placing the mixture adjacent to a substrate material prior to sintering.

7. The method of claim 6, wherein agitating comprises agitating the mixture while adjacent to the substrate.

8. The method of claim 6, wherein the substrate material creates one of a planar interface and a non-planar interface with the mixture.

9. The method of claim 6, wherein sintering further comprises fusing the mixture to the substrate.

10. The method of claim 1, further comprising immobilizing the diamond particles in the mixture with a fixing agent prior to sintering.

11. The method of claim 10, wherein the fixing agent is wax.

12. A method for distributing granular constituents within polycrystalline diamond composites, the method comprising:
providing diamond particles segregated into adjacent regions according to particle size;
agitating the diamond particles to create a zone of intermixing between adjacent regions;
sintering the diamond particles to substantially immobilize the diamond particles within each region.

13. The method of claim 12, wherein agitating comprises moving larger diamond particles upward and smaller diamond particles downward.

14. The method of claim 12, wherein agitating comprises moving smaller diamond particles upward and larger diamond particles downward.

15. The method of claim 12, wherein the adjacent regions, after agitation, provide a substantially continuously graded mixture of diamond particles.

16. The method of claim 12, wherein sintering further comprises fusing the diamond particles to a substrate.

17. The method of claim 12, further comprising substantially immobilizing the diamond particles with a fixing agent prior to sintering.

18. The method of claim 17, wherein the fixing agent is wax.

19. A cutting element comprising:
a polycrystalline diamond composite (PDC) layer comprising diamond particles of different sizes, wherein the diamond particles are substantially continuously graded, according to size, from a first side of the layer to a second side of the layer.

20. The cutting element of claim 19, further comprising a substrate adhered to the PDC layer.

21. The cutting element of claim 20, wherein the interface between the substrate and the PDC layer is substantially planar.

22. The cutting element of claim 20, wherein the interface between the substrate and the PDC layer is substantially non-planar.
